# EUROPEAN PATENT SPECIFICATION

(11) **EP 2 224 695 B1**
(45) Date of publication and mention of the grant of the patent: **13.04.2011**
(21) Application number: 09154049.2
(22) Date of filing: 27.02.2009
(51) Int. Cl.: H04M 1/03

(54) **Enclosure for a speaker of a wireless device**
Gehäuse für einen Sprecher einer drahtlosen Vorrichtung
Enceinte pour un haut-parleur dans un dispositif sans fil

(43) Date of publication of application: 01.09.2010
(60) Divisional application: 11153840.1
(73) Proprietor: RESEARCH IN MOTION LIMITED, Waterloo, Ontario N2L 3W8 (CA)
(72) Inventor: Welker, Michael, Waterloo Ontario N2L 3W8 (CA); Hanson, Daniel, Waterloo Ontario N2L 3L3 (CA)
(74) Representative: Moore, Barry

(56) References cited:
- EP-A- 1 603 308
- WO-A-02/080501
- WO-A-2008/060026
- GB-A- 2 386 281

## Description

### FIELD OF THE APPLICATION

This application relates to the field of wireless devices, and more specifically, to an enclosure for a speaker of a wireless device.

### BACKGROUND

Current wireless mobile communication devices include microprocessors, memory, soundcards, speakers, headphones, and run one or more software applications in addition to providing for voice communications. Examples of software applications used in these wireless devices include micro-browsers, address books, email clients, instant messaging ("IM") clients, and wavetable instruments. Additionally, wireless devices have access to a plurality of services via the Internet. A wireless device may, for example, be used to browse web sites on the Internet, to transmit and receive graphics, and to execute streaming audio and/or video applications. Such wireless devices may operate on a cellular network, on a wireless local area network ("WLAN"), or on both of these types of networks.

One problem with current wireless devices pertains to speaker performance. Speakers in wireless devices require a back-volume to perform properly. The back-volume is a space, cavity, or volume typically located behind the speaker which is sized to allow unrestricted movement of the speaker's cone. If an adequate back-volume is not provided, the frequency response and efficiency of the speakers may be adversely affected by back pressure restricting movement of the speaker's cone. In general, providing a speaker with a back-volume by placing the speaker in an enclosure results in improved low frequency response and higher volume or loudness. Cavities associated with the wireless device's internal back-volume by placing the speaker in an enclosure results in improved low frequency response and higher volume or loudness. Cavities associated with the wireless device's internal antenna or internal printed circuit boards may be used as a back-volume for the wireless device's speaker. However, using such cavities typically requires a complicated sealing geometry. In addition, such cavities may not be large enough to provide an adequate back-volume for the wireless device's speaker. As such, these cavities may have to be increased in volume by increasing the thickness of the wireless device thus increasing the overall size of the wireless device, which is not desirable.

WO 02080501 (A1) describes a portable electronic device, such as a mobile phone or internet access device, has a microdisplay, with an internal space between a viewing window and a display screen. The internal space is used as an acoustic resonance volume for a speaker.

WO 2008060026 (A1) discloses a sound converter with an enclosure which utilizes an outer space to expand a resonance space. The sound converter with the enclosure includes a frame being equipped with a magnetic circuit for forming a magnetic field in a predetermined gap, a voice coil at least partially positioned in the gap, a diaphragm adhered to the voice coil and inserted into a diaphragm seating portion of the frame, a protector formed at the upper portion of the diaphragm, and an enclosure case coupled to the frame, for defining the inner space of the enclosure which is the resonance space. A vent is provided at the enclosure case so that the inner space of the enclosure can communicate with the outer space. This configuration can secure a wide resonance space.

A need therefore exists for an improved enclosure for a speaker of a wireless device. Accordingly, a solution that addresses, at least in part, the above and other shortcomings is desired.

These and other problems are addressed by a wireless device in accordance with claim 1. Advantageous embodiments are provided in the dependent claims.

### BRIEF DESCRIPTION OF THE DRAWINGS

Features and advantages of the embodiments of the present application will become apparent from the following detailed description, taken in combination with the appended drawings, in which:

FIG. 1 is a front view illustrating a wireless device in accordance with an embodiment of the application;

FIG. 2 is a block diagram illustrating the wireless device of FIG. 1;

FIG. 3 is a block diagram illustrating a memory of the wireless device of FIG. 1;

FIG. 4 is a simplified longitudinal section view illustrating an enclosure for a speaker of the wireless device of FIG. 1;

FIG. 5 is a simplified longitudinal section view illustrating an enclosure for a speaker of a wireless device in accordance with an alternate embodiment;

FIG. 6 is a simplified longitudinal section view illustrating an enclosure for a speaker of a wireless device in accordance with an alternate embodiment;

FIG. 7 is a simplified longitudinal section view illustrating an enclosure for a speaker of a wireless device in accordance with an alternate embodiment; and,

FIG. 8 is a simplified longitudinal section view illustrating an enclosure for a speaker of a wireless device in accordance with an alternate embodiment.

It will be noted that throughout the appended drawings, like features are identified by like reference numerals.

### DETAILED DESCRIPTION OF THE EMBODIMENTS

In the following description, details are set forth to provide an understanding of the application. In some instances, certain software, circuits, structures and techniques have not been described or shown in detail in order not to obscure the application.

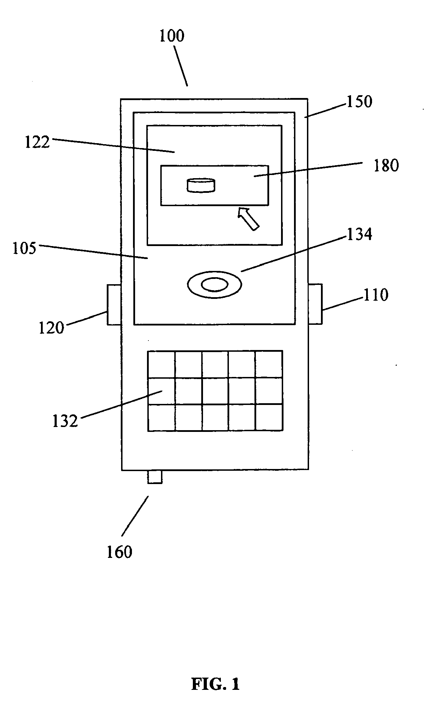

FIG. 1 is a front view illustrating a wireless device **100** in accordance with an embodiment of the application. The wireless device **100** includes a case **150,** a display (e.g., a liquid crystal display ("LCD")) **122,** a graphical user interface ("GUI") **180** displayed on the display **122,** a transparent cover (e.g., a lens) **105** mounted over the display **122** for protection thereof, a speaker **134,** a keyboard (or keypad) **132,** a thumbwheel (or trackwheel) **110,** various select buttons **120,** and various inputs/outputs (e.g., power connector jack, data interface ports, headphones jack, etc.) **160.** Internally, the wireless device **100** typically includes one or more circuit boards (not shown in FIG. 1), a CPU **138,** memory **124, 126, 200,** a battery **156,** an antenna (not shown in FIG. 1), etc., which are operatively coupled to the various inputs/outputs **160,** the keyboard **132,** the display **122,** the speaker **134,** etc., as will be described below.

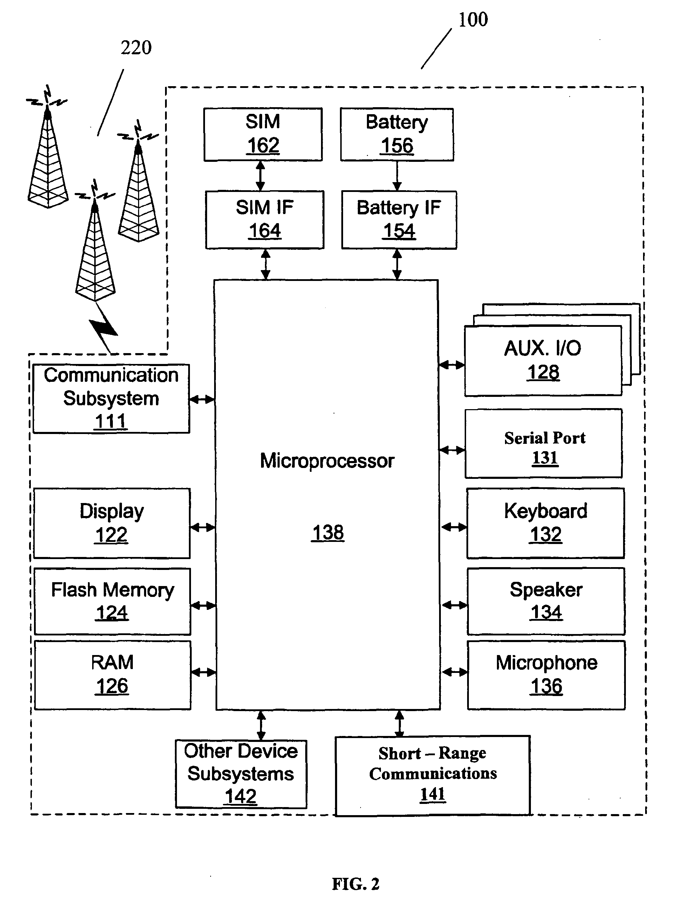

FIG. 2 is a block diagram illustrating the wireless device **100** of FIG. 1. The wireless device **100** may operate over a wireless network **220.** The wireless network **220** may include antenna, base stations, access points, transceivers, supporting radio equipment, etc., as known to those of ordinary skill in the art, for supporting wireless communications between the wireless device **100** and other devices (not shown).

The wireless device **100** may be a two-way communication device having at least voice and advanced data communication capabilities, including the capability to communicate with other devices. Depending on the functionality provided by the device **100,** it may be referred to as a data messaging device, a two-way pager, a cellular telephone with data messaging capabilities, a wireless Internet appliance, a data communication device (with or without telephony capabilities), a Wi-Fi device, a WLAN device, a dual-mode (i.e., Wi-Fi and cellular) device, or a portable audio device. The device **100** may communicate with any one of a plurality of transceiver stations (not shown) within its geographic coverage area.

The wireless device **100** has a communication subsystem 111, which includes a RF receiver, a RF transmitter, and associated components, such as one or more antenna elements (e.g., embedded or internal), local oscillators ("LOs"), and a processing module such as a digital signal processor ("DSP") (all not shown).

The device **100** may be capable of cellular network access and hence the device **100** may have a subscriber identity module (or "SIM" card) **162** for inserting into a SIM interface ("IF") **164** in order to operate on the cellular network (e.g., a global system for mobile communication ("GSM") network).

The device **100** may be a battery-powered device and so it may also include a battery IF **154** for receiving one or more rechargeable batteries **156.** The battery (or batteries) **156** provides electrical power to most if not all electrical circuitry in the device **100,** and the battery IF **154** provides for a mechanical and electrical connection for it. The battery IF **154** is coupled to a regulator (not shown) which provides regulated power to the circuitry of the device **100.**

The wireless device **100** includes a microprocessor **138** which controls overall operation of the device **100.** Communication functions, including at least data and voice communications, are performed through the communication subsystem **111.** The microprocessor **138** also interacts with additional device subsystems such as the display **122,** a flash memory **124** or other persistent store, a random access memory ("RAM") **126,** auxiliary input/output ("I/O") subsystems **128,** a serial port (e.g., a universal serial bus ("USB") port) **131,** the keyboard **132,** the clickable thumbwheel **110,** the speaker **134,** a microphone **136,** a short-range communications subsystem **141,** and other device subsystems **142.**

The microprocessor **138,** in addition to its operating system functions, preferably enables execution of software applications on the device **100.** A predetermined set of applications which control basic device operations, including at least data and voice communication applications, will normally be installed on the device **100** during its manufacture. A preferred application that may be loaded onto the device **100** may be a personal information manager ("PIM") application having the ability to organize and manage data items relating to the user such as, but not limited to, instant messaging ("IM"), email, calendar events, voice mails, appointments, and task items. Naturally, one or more memory stores are available on the device **100** and SIM **162** to facilitate storage of PIM data items and other information.

In a data communication mode, a received signal such as a text message, an email message, or web page download will be processed by the communication subsystem **111** and input to the microprocessor **138.** The microprocessor **138** will preferably further process the signal for output to the display **122** and/or to the auxiliary I/O device **128.** A user of the wireless device **100** may also compose data items, such as email messages, for example, using the keyboard **132** in conjunction with the display **122,** and possibly the auxiliary I/O device **128.** The keyboard **132** is preferably a complete alphanumeric keyboard and/or a telephone-type keypad. These composed items may be transmitted over a communication network **220** through the communication subsystem **111** or the short range communication subsystem **141.**

For voice communications, the overall operation of the wireless device **100** is substantially similar, except that the received signals would be output to the speaker **134** and signals for transmission would be generated by the microphone **136.** Alternative voice or audio I/O subsystems, such as a voice message recording subsystem, may also be implemented on the device **100.** Although voice or audio signal output is preferably accomplished primarily through the speaker **134,** the display **122** may also be used to provide, for example, an indication of the identity of a calling party, duration of a voice call, or other voice call related information.

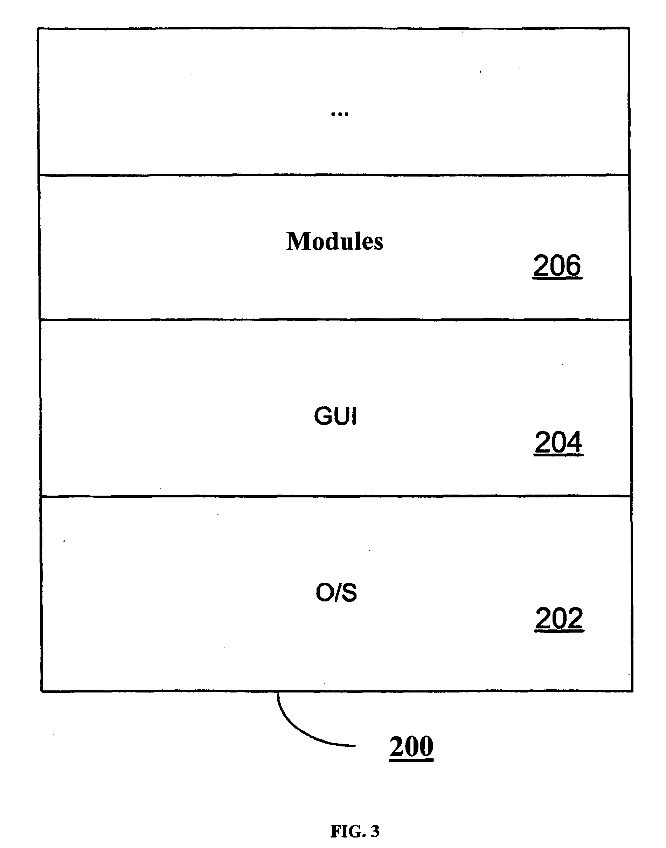

FIG. 3 is a block diagram illustrating a memory **200** of the wireless device **100** of FIG. 1. The microprocessor **138** is coupled to the memory **200.** The memory **200** has various hardware and software components for storing information (e.g., instructions, data, database tables, test parameters, etc.) for enabling operation of the device **100** and may include flash memory **124,** RAM **126, ROM** (not shown), disk drives (not shown), etc. In general, the memory **200** may include a variety of storage devices typically arranged in a hierarchy of storage as understood to those skilled in the art.

According to one embodiment, the wireless device **100** may be a multi-tasking wireless communications device configured for sending and receiving data items and for making and receiving voice calls. In addition, the microprocessor **138** of the wireless device **100** is typically coupled to one or more devices or subsystems (e.g., **110, 120, 132**) for receiving user commands or queries and for displaying the results of these commands or queries to the user on the display **122.** To provide a user-friendly environment to control the operation of the device **100,** operating system ("O/S") software modules **202** resident on the device **100** provide a basic set of operations for supporting various applications typically operable through the GUI **180** and supporting GUI software modules **204.** For example, the O/S **202** provides basic input/output system features to obtain input from the auxiliary I/O **128,** the keyboard **132,** the clickable thumbwheel **110,** and the like, and for facilitating output to the user through the display **122,** the speaker **134,** etc. Though not shown, one or more applications for managing communications or for providing personal digital assistant like functions may also be included. According to one embodiment, the wireless device **100** is provided with hardware and/or software modules **206** for facilitating and implementing various additional functions. According to one embodiment, a user may interact with the wireless device **100** and its various software modules **202, 204, 206**, using the GUI **180.**

The present application provides an enclosure for the speaker **134** that allows the wireless device **100** to maintain its thickness while using a cavity that is not used for anything else in the wireless device **100.** In addition, there is no need for separate sealing of this cavity as dust sealing of this cavity is already provided.

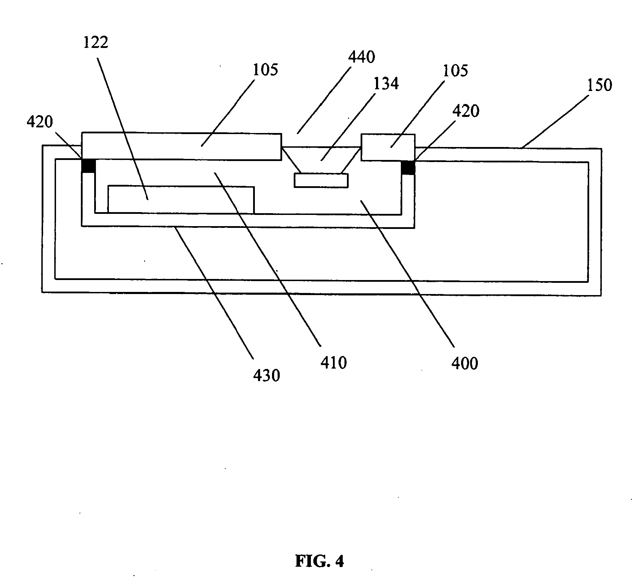

FIG. 4 is a simplified longitudinal section view illustrating an enclosure **400** for a speaker **134** of the wireless device **100** of FIG. 1. The enclosure **400** provides a back-volume **410** or cavity for the speaker **134** of the wireless device **100.** According to one embodiment, the enclosure **400** is formed by the lower surface of the transparent cover **105,** also called a lens, the upper surface of the display **122,** and sealing material **420** that forms or completes the walls of the enclosure **400.** The lens **105** is spaced apart from the display **122** by the sealing material **420** to form the back-volume **410** therebetween. Portions of the enclosure **400** may be formed by various supports **430** for the display **122** and/or speaker **132** (e.g., printed circuit boards, spacers, baffles, etc.) and by various portions of the case **150** depending on the geometry of the display **122,** transparent cover **105,** speaker **134,** and case **150.** For example, depending on the geometry of the components used, the speaker **134** may form or complete a wall of the enclosure **400.**

According to one embodiment, the sealing material **420** may include dust sealing material that is typically used to seal the perimeter of the display **122** and transparent cover **105** to prevent dust from entering therebetween. In addition, the sealing material **420** may include acoustic sealing material to improve the performance of the back-volume **410.** Of course, the material chosen for the sealing material **420** may include both appropriate dust sealing and acoustic sealing properties. According to one embodiment, the sealing material **420** may be silicon or a thermoplastic elastomer ("TPE").

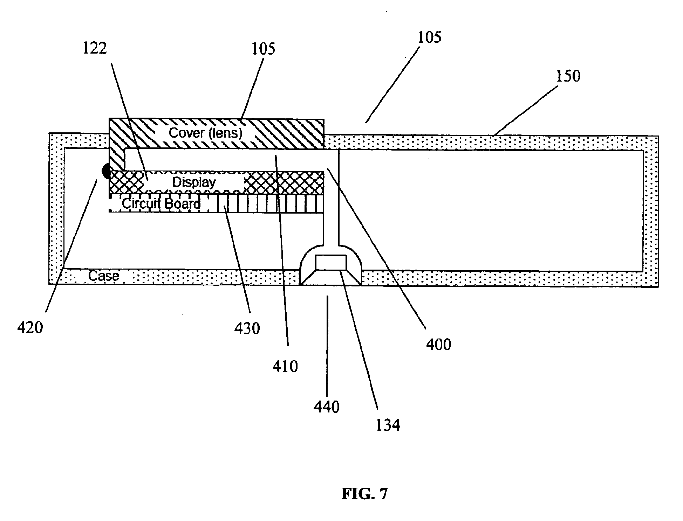

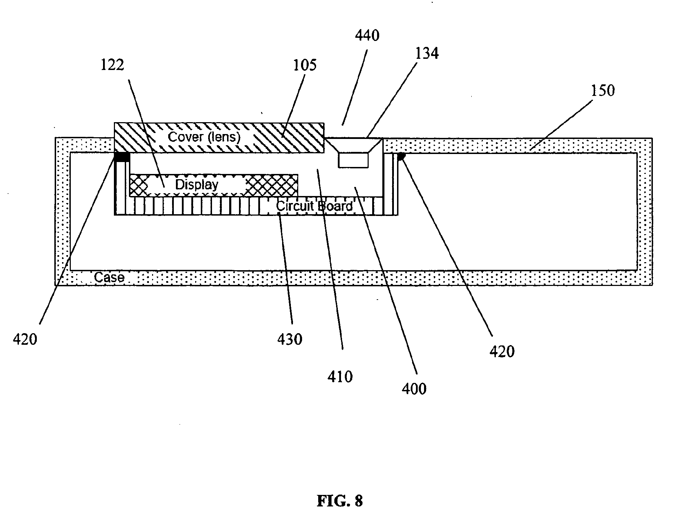

The speaker **134** is mounted proximate to the back-volume **410,** and may become part of the enclosure **400.** In FIGS. 1 and 4, the speaker **134** is shown as being mounted behind the transparent cover **105** for projecting sound through an appropriate opening or openings **440** in the transparent cover **105.** However, according to another embodiment, the speaker **134** may be mounted in the case **150** proximate to the back-volume **410** (see FIGS. 7,8).

According to one embodiment, the speaker **134** is a magnetic type loudspeaker (i.e., having a magnet, cone, frame, etc.). According to one embodiment, the wireless device **100** has two or more speakers **134.**

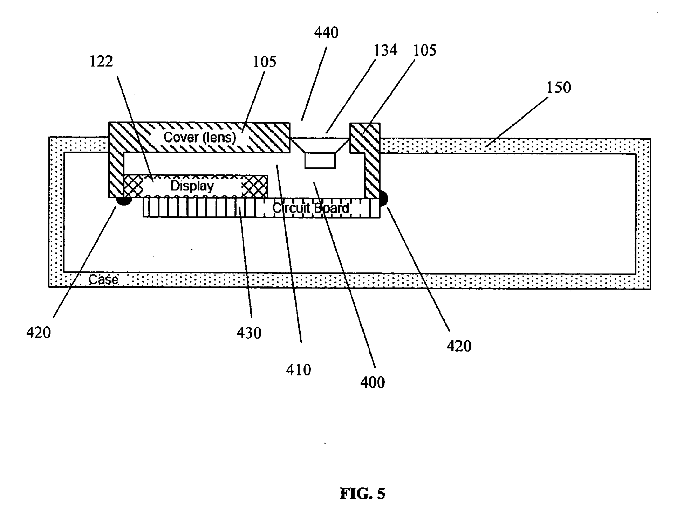

FIG. 5 is a simplified longitudinal section view illustrating an enclosure **400** for a speaker **134** of a wireless device **100** in accordance with an alternate embodiment. In FIG. 5, the transparent cover **105** is L-shaped having one end proximate to one end of the display **122.** In this embodiment, the sealing material **420** does not necessarily form a significant portion of the enclosure **400.**

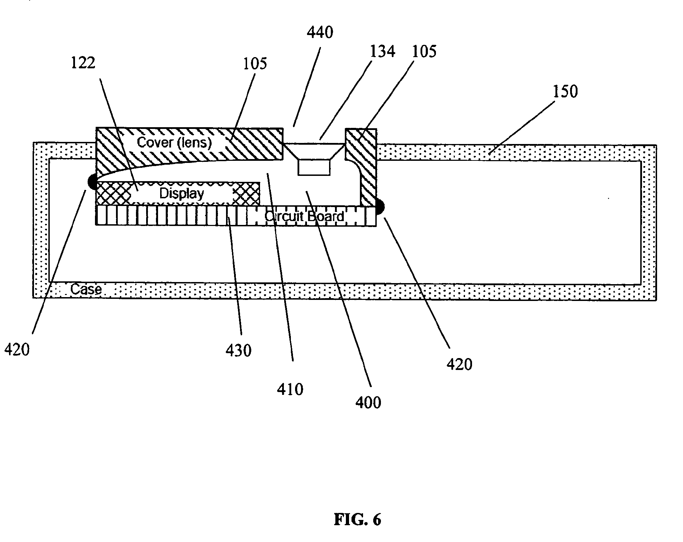

FIG. 6 is a simplified longitudinal section view illustrating an enclosure **400** for a speaker **134** of a wireless device **100** in accordance with an alternate embodiment. In FIG. 6, the transparent cover **105** is tapered at one end proximate to one end of the display **122.** In this embodiment, the sealing material **420** does not necessarily form a significant portion of the enclosure **400.**

FIG. 7 is a simplified longitudinal section view illustrating an enclosure **400** for a speaker **134** of a wireless device **100** in accordance with an alternate embodiment. In FIG. 7, the transparent cover **105** is L-shaped having one end proximate to one end of the display **122.** In this embodiment, the sealing material **420** does necessarily not form a significant portion of the enclosure **400.** In this embodiment, the speaker **134** is mounted on the back of the case **150** to which the back-volume **410** extends.

FIG. 8 is a simplified longitudinal section view illustrating an enclosure **400** for a speaker **134** of a wireless device **100** in accordance with an alternate embodiment. In FIG. 8, the support **430** is C-shaped having one end proximate to the case **150.** In this embodiment, the sealing material **420** between the transparent cover **105** and the support **430** forms a portion of the enclosure **400** but the sealing material **420** between the support **430** and the case **150** does not necessarily form a significant portion of the enclosure **400.** In this embodiment, an opening or openings **440** for the speaker **134** is provided in the case **150** rather than in the transparent cover **105.**

The above embodiments may provide one or more advantages. First, no additional volume within the wireless device **100** is required. Second, the thickness or overall size of the wireless device **100** does not have to be increased to accommodate the back-volume **410.** Third, no additional sealing pats are necessary, thus reducing costs. Fourth, the enclosure **400** provides a back-volume **410** that is large enough to provide good speaker performance.

The embodiments of the application described above are intended to be exemplary only. Those skilled in this art will understand that various modifications of detail may be made to these embodiments, all of which come within the scope of the application.

## Claims

1. A wireless device (100), comprising: a magnetic speaker (134) a display (122) mounted in a case (150) and a transparent cover (105) mounted over at least the display (122), wherein the display (122) is at least partially spaced from the transparent cover (105) to form at least a portion of an enclosed back-volume (410) formed within the case (150) for the magnetic speaker, the magnetic speaker being mounted directly into the enclosed back-volume (410), and at least one of the transparent cover (105) and the case (150) having an opening (440) formed therein for emitting sound from the magnetic speaker (134).

2. The wireless device of claim 1 wherein a portion of the case (150) defines the enclosed back-volume (410).

3. The wireless device of claim 1 or claim 2 wherein at least one of the display (122) and the speaker (134) are mounted on a support (430) within the wireless device.

4. The wireless device of claim 3 wherein a portion of the support (430) defines the enclosed back-volume.

5. The wireless device of claim 4 wherein the support (430) comprises a portion of the case.

6. The wireless device of claim 4 wherein the support comprises a printed circuit board.

7. The wireless device of claim 1 wherein a portion of sealing material (420) defines the enclosed back-volume.

8. The wireless device of claim 7 wherein the portion of sealing material (420) is located proximate a lower surface of the transparent cover.

9. The wireless device of claim 8 wherein the sealing material (420) is at least one of dust sealing and acoustic sealing material.

10. The wireless device of any one of the preceding claims wherein the magnetic speaker (134) is mounted under the transparent cover and emits sound through an opening in the transparent cover.

11. The wireless device of any one of claims 1 to 9 wherein the magnetic speaker (134) is mounted under a portion of the case and emits sound through an opening in the case.

## Patentansprüche

1. Drahtlose Vorrichtung (100), die aufweist:
einen magnetischen Lautsprecher (134), eine Anzeige (122), die in einem Gehäuse (150) angebracht ist, und eine transparente Abdeckung (105), die über zumindest der Anzeige (122) angebracht ist, wobei die Anzeige (122) zumindest teilweise von der transparenten Abdeckung (105) beabstandet ist, um zumindest einen Teil eines umschlossenen rückwärtigen Volumens (410) zu bilden, das in dem Gehäuse (150) für den magnetischen Lautsprecher gebildet wird, wobei der magnetische Lautsprecher direkt in dem umschlossenen rückwärtigen Volumen (410) angebracht wird, und zumindest eines aus der transparenten Abdeckung (105) und dem Gehäuse (150) eine Öffnung (440) darin ausgebildet hat zum Ausgeben von Klang aus dem magnetischen Lautsprecher (134).

2. Drahtlose Vorrichtung gemäß Anspruch 1, wobei ein Teil des Gehäuses (150) das umschlossene rückwärtige Volumen (410) definiert.

3. Drahtlose Vorrichtung gemäß Anspruch 1 oder Anspruch 2, wobei zumindest eines aus der Anzeige (122) und dem Lautsprecher (134) auf einer Halterung (430) in der drahtlosen Vorrichtung angebracht ist.

4. Drahtlose Vorrichtung gemäß Anspruch 3, wobei ein Teil der Halterung (430) das umschlossene rückwärtige Volumen definiert.

5. Drahtlose Vorrichtung gemäß Anspruch 4, wobei die Halterung (430) einen Teil des Gehäuses aufweist.

6. Drahtlose Vorrichtung gemäß Anspruch 4, wobei die Halterung eine Leiterplatte aufweist.

7. Drahtlose Vorrichtung gemäß Anspruch 1, wobei ein Teil eines Abdichtmaterials (420) das umschlossene rückwärtige Volumen definiert.

8. Drahtlose Vorrichtung gemäß Anspruch 7, wobei sich der Teil des Abdichtmaterials (420) in der Nähe einer unteren Oberfläche der transparenten Abdeckung befindet.

9. Drahtlose Vorrichtung gemäß Anspruch 8, wobei das Abdichtmaterial (420) zumindest eines aus einem Staubversiegelungs- und einem akustischen Abdichtmaterial ist.

10. Drahtlose Vorrichtung gemäß einem der vorhergehenden Ansprüche, wobei der magnetische Lautsprecher (134) unter der transparenten Abdeckung angebracht ist und Klang durch eine Öffnung in der transparenten Abdeckung abgibt.

11. Drahtlose Vorrichtung gemäß einem der Ansprüche 1 bis 9, wobei der magnetische Lautsprecher (134) unter einem Teil des Gehäuses angebracht ist und Klang durch eine Öffnung in dem Gehäuse abgibt.

## Revendications

1. Dispositif sans fil (100), comprenant : un haut-parleur magnétique (134), un dispositif d'affichage (122) monté dans un boîtier (150) et un capot transparent (105) monté sur au moins le dispositif d'affichage (122), dans lequel le dispositif d'affichage (122) est au moins partiellement espacé du capot transparent (105) de façon à former au moins une partie d'un volume arrière clos (410) formé à l'intérieur du boîtier (150) pour le haut-parleur magnétique, le haut-parleur magnétique étant monté directement dans le volume arrière clos (410), et au moins l'un du capot transparent (105) et du boîtier (150) comportant une ouverture (440) formée à l'intérieur de celui-ci pour émettre un son à partir du haut-parleur magnétique (134).

2. Dispositif sans fil selon la revendication 1, dans lequel une partie du boîtier (150) définit le volume arrière clos (410).

3. Dispositif sans fil selon la revendication 1 ou la revendication 2, dans lequel au moins l'un du dispositif d'affichage (122) et du haut-parleur (134) sont montés sur un support (430) à l'intérieur du dispositif sans fil.

4. Dispositif sans fil selon la revendication 3, dans lequel une partie du support (430) définit le volume arrière clos.

5. Dispositif sans fil selon la revendication 4, dans lequel le support (430) comprend une partie du boîtier.

6. Dispositif sans fil selon la revendication 4, dans lequel le support comprend une carte de circuits imprimés.

7. Dispositif sans fil selon la revendication 1, dans lequel une partie de matériau d'étanchéité (420) définit le volume arrière clos.

8. Dispositif sans fil selon la revendication 7, dans lequel la partie de matériau d'étanchéité (420) est disposée à proximité d'une surface inférieure du capot transparent.

9. Dispositif sans fil selon la revendication 8, dans lequel le matériau d'étanchéité (420) est au moins l'un d'un matériau d'étanchéité à la poussière et d'un matériau d'étanchéité acoustique.

10. Dispositif sans fil selon l'une quelconque des revendications précédentes, dans lequel le haut-parleur magnétique (134) est monté sous le capot transparent et émet un son à travers une ouverture dans le capot transparent.

11. Dispositif sans fil selon l'une quelconque des revendications 1 à 9, dans lequel le haut-parleur magnétique (134) est monté sous une partie du boîtier et émet un son à travers une ouverture dans le boîtier.
